# EUROPÄISCHE PATENTSCHRIFT

(11) **EP 0 578 265 B1**
(45) Veröffentlichungstag und Bekanntmachung des Hinweises auf die Patenterteilung: **16.04.1997**
(21) Anmeldenummer: 93111088.6
(22) Anmeldetag: 10.07.1993
(51) Int. Cl.: G01G 17/04, G01G 19/30, B01F 13/10

(54) **Dosiereinrichtung zum Herstellen dosierter Mischungen chemischer Erzeugnisse**
Metering device for preparing dosed mixtures of chemical products
Dispositif de dosage pour préparer des mélanges dosés de produits chimiques

(30) Priorität: 10.07.1992 IT MI921685
(43) Veröffentlichungstag der Anmeldung: 12.01.1994
(73) Patentinhaber: Gavazzi, Giuseppe, 24059 Urgnano (BG) (IT)
(72) Erfinder: Gavazzi, Giuseppe, 24059 Urgnano (BG) (IT)
(74) Vertreter: Mayer, Hans Benno, Dipl.-Ing.

(56) Entgegenhaltungen:
- EP-A- 0 421 742
- DE-A- 3 201 221
- FR-A- 2 245 496

## Beschreibung

Die vorstehende Erfindung betrifft eine Dosiereinrichtung zum Herstellen dosierter Mischungen, bestehend aus chemischen Erzeugnissen.

Dosiereinrichtungen dieser Art finden zum Beispiel Verwendung in Faerbereibetrieben oder Druckereien, in denen Farbbaeder herzustellen sind, oder in Versuchsanstalten zur Durchfuehrung von Faerbeversuchen, sowie in der chemischen Industrie, z.B. zum Dosieren von Saeuren oder korrosiven Stoffen.

In den bekannten Dosiereinrichtungen sind die einzelnen Vorratsbehaelter zur Aufnahme der verschiedenen zu dosierenden Stoffe, in Reihe auf einer Plattform angeordnet. Die Plattform ist neben einer Waage vorgesehen, und auf der Waage wird ein Mischbehaelter fuer die herzustellende Mischung angeordnet. Die Uebertragung der zu dosierenden Stoffe von den Vorratsbehaeltern in den Mischbehaelter erfolgt ueber eine pneumatische Einrichtung. Mit jedem Vorratsbehalter sind abgedichtet zwei Rohrleitungen verbunden. Eine Rohrleitung dient zum Zufuehren eines Druckgases, z.B. Druckluft, und die zweite Rohrleitung ist fuer den Auslauf der zu dosierenden Stoffmenge vorgesehen. Die Oeffnungen der Auslaufleitungen sind buendelartig ueber der Waage angeordnet und muenden in einen gemeinsamen Ausflusstrichter. In jeder Auslaufleitung ist ein Absperrventil vorgesehen, z.B. ein von Hand betaetigbares Ventil oder ein Elektroventil, das mit einem Schnellanschluss ausgeruestet ist, um den Austausch eines geleerten Vorratsbehaelters mit einem neuen, gefuellten Vorratsbehaelter rasch zu ermoeglichen.

In den bekannten Dosiereinrichtungen ist es erforderlich, dass die Bedienungsperson Zugang sowohl zur Rueckseite als auch zur Vorderseite der Dosiereinrichtung hat, um den Austausch der geleerten Vorratsbehaelter durchfuehren zu koennen. Dies erfordert eine grosse Standflaeche fuer die Aufnahme der Vorratsbehaelter und verhindert eine Anordnung der Dosiereinrichtung gegen eine Wand. Die bekannte Anordnung der Vorratsbehaelter auf einer fest angeordneten Plattform erfordert ferner einen groesseren Zeitaufwand fuer die Durchfuehrung der haeufig auftretenden Austauschvorgaenge der Vorratsbehaelter.

Ein weiterer Nachteil, der den bekannten Dosiereinrichtungen anhaftet, ist darin zu sehen, dass sich in dem Teilstueck der Rohrleitung, das zwischen dem Schnellverschluss und der Auslaufoeffnung liegt, eine Teilmenge der vom auszutauschenden Vorratsbehaelter angelieferten Fluessigkeit, z.B. ein Faerbemittel, verbleibt. Daraus folgt, dass in bekannten Anlagen stets ist ein leerer Vorratsbehaelter mit einem neuen Vorratsbehaelter, der die gleiche Fluessigkeit aufnimmt, zu ersetzen ist. Beim Anschliessen eines neuen Vorratsbehaelters, der z.B. ein anderes Faerbemittel enthaelt, ist es notwendig, die an der Dosiervorrichtung angeordnete Rohrleitung zu entleeren und zu spuelen. Diese Vorgaenge verzoegern weiter die Austauschvorgaenge fuer die Vorratsbehaelter.

Aus dem Stand der Technik sind auch Vorratsbehaelter bekannt geworden, bei denen im Behaelterverschluss ein Absperrventil vorgesehen ist. Der Einsatz dieser bekannten Behaelter in den bekannten Dosiereinrichtungen erlaubt es aber nicht, die beschriebenen Nachteile in ihrer Gesamtheit zu vermeiden.

Aus der FR-A-2245496 ist eine Vorrichtung zum Mischen von Farben bekannt, bei welcher wenigstens zwei uebereinanderliegende, ringfoermige Plattformen vorgesehen sind, die durch einen reversierbaren Antriebsmotor drehbar gelagert sind, wobei den Plattformen Mittel zum Heben bzw. Senken der Plattformen gegenueber einem auf einer Waageschale abgestellten Mischbehaelter zugeordnet sind. Die vorgesehenen Vorratsbehaelter weisen in ihrem Behaelterboden ein steuerbares Ventil auf, das geeignet ist, in den darunterstehenden Mischbehaelter durch Schwerkraft Farbe abstroemen zu lassen.

Es ist Aufgabe der vorstehenden Erfindung, die Nachteile des Standes der Technik zu vermeiden und eine Dosiereinrichtung entsprechend dem Oberbegriff des Anspruches 1 zu schaffen, die einen einfachen Zugang zu allen Vorratsbehaeltern auf nur einer Seite der Dosiereinrichtung ermoeglicht. Es ist ferner Aufgabe der Erfindung, die Zeiten fuer den Austausch der Vorratsbehaelter zu verkuerzen und den Austausch von Vorratsbehaeltern mit unterschiedlichen Fluessigkeiten zu ermoeglichen, ohne dafuer Reinigungs- und Spuelvorgaenge durchfuehren zu muessen.

Gelöst wird diese Aufgabe durch die Merkmale von Anspruch 1.

Ein automatischer Drehantrieb der Plattform zur Automatisierung der Dosiervorgaenge wird dadurch ermoeglicht, dass die freien Enden der Auslaufleitungen der Vorratsbehälter mit gleichbleibender Teilung in der ringförmigen Tragscheibe angeordnet sind.

Es besteht die Moeglichkeit, den Dosiervorgang ueber einen Vorwaehlvorgang automatisch durchzufuehren, wenn der Antriebsmotor der Plattform und die elektrischen Leitungen der Elektroventile der Vorratsbehaelter mit einem Mikroprozessor oder einer programmierbaren Datenverarbeitungsanlage wirkverbunden sind.

Die Fertigung und der Zusammenbau der Dosiereinrichtung werden dadurch vereinfacht, dass die Antriebswelle der drehbaren Plattform hohl ausgebildet ist und die Zufuehrleitungen zum Zufuehren eines Druckgases, sowie die elektrischen Leitungen zum Steuern der Elektroventile der Vorratsbehaelter in der Hohlwelle aufgenommen sind. Es wird ein einfacherer und schneller Austausch der Vorratsbehaelter und die Moeglichkeit, unterschiedliche zu dosierende Fluessigkeiten ohne Zwischenspuelung der Rohrleitungen einzusetzen, dadurch moeglich, dass die Vorratsbehaelter das Absperrventil in ihren Verschlusskappen aufnehmen.

Bei Verwendung einer grossen Anzahl von Vorratsbehaeltern, wird die Lageanordnung der Auslaufleitungen in der ringförmigen Tragscheibe vereinfacht und eine unmißverstaendliche Kennzeichnung der einzelnen Auslaufleitungen wird dadurch erreicht, dass das freie Ende der Auslaufleitungen der Vorratsbehaelter mit Ausflussduesen versehen sind, die einen Anschlagkragen aufweisen, und die Duesen sowie der Anschlagkragen in Ausnehmungen der ringfoermigen Tragscheibe angeordnet sind, wobei jeder Duese ein blockfoermig ausgebildetes Erkennungsmittel zugeordnet ist, das an der ringfoermigen Tragscheibe angelenkt ist und zwischen einer Festhalteposition der Duese in der Ausnehmung und einer Freistellung der Duese verschwenkbar ist.

Es wird ein automatischer Dosiervorgang fuer eine Vielzahl von abgestimmten Mischungen dadurch moeglich, dass die Dosiereinrichtung eine drehbare Scheibe aufweist, die von einem Motor antreibbar ist und eine Vielzahl von Mischbehaeltern aufnimmt, wobei der drehbaren Scheibe ein steuerbarer Greiferarm zugeordnet ist, der in Reihenfolge die Mischbehaelter auf die Waage absetzt und diese Mischbehaelter nach Durchfuehrung des Dosiervorganges auf der Scheibe erneut absetzt, wobei die Scheibe von einem Motor angetrieben wird, der die Plattform antreibt, und wobei der steuerbare Greiferarm mit einem Mikroprozessor oder einer Datenverarbeitungsanlage der Dosiereinrichtung wirkverbunden ist.

Es wird eine kompakte Ausfuehrungsform der Dosiereinrichtung dadurch erreicht, dass die Plattform mehrstoeckig ausgebildet ist.

Die erfindungsgemaesse Dosiereinrichtung weist den Vorteil auf, dass sie geringen Platzbedarf hat und ein Aufstellen der Einrichtung auch gegen eine Wand moeglich ist. Je nach Ausfuehrung koennen wahlweise Vorratsbehaelter beliebiger Ausfuehrungsform verwendet werden, z.B. Vorratsbehaelter mit handbetaetigten Ventilen, Vorratsbehaelter mit Elektroventilen, die in der Abschlusskappe angeordnet sind oder Vorratsbehaelter mit oder ohne eingebauter Mischvorrichtung.

Weitere Vorteile und Merkmale der erfindungsgemaessen Dosiereinrichtung koennen der folgenden Beschreibung eines bevorzugten Ausfuehrungsbeispieles entnommen werden, das in den Zeichnungen schematisch dargestellt ist. Es zeigen:
Fig. 1 eine Vorderansicht der Dosiereinrichtung,
Fig. 2 eine Draufsicht der Dosiereinrichtung nach Fig. 1 in der Ebene II-II der Fig. 1,
Fig. 3 das Detail B der Fig. 1 in Vorderansicht, in vergroessertem Maßstab,
Fig. 4 eine Draufsicht der Einrichtung gemaess Fig. 3 mit einer danebenliegenden Rohrleitung.

Es werden nur die fuer das Verstaendnis der Erfindung wesentlichen Teile beschrieben und dargestellt.

In der einfachsten Ausfuehrungsform der Dosiereinrichtung 1 weist diese ein bekanntes Tragegestell 2 auf, das eine Waage 3 aufnimmt, auf der jeweils ein Mischbehaelter 4 angeordnet ist, ueber dem eine Dosiereinrichtung 5 fuer das Zuleiten von kaltem und warmem Wasser angeordnet ist. Ferner ist eine elektrische Schalttafel 6 vorgesehen, sowie eine Plattform, die eine Vielzahl von Vorratsbehaeltern 7 aufnimmt.

Die zur Aufnahme der Vorratsbehaelter 7 bestimmte Plattform (8) ist drehbar am Gestell 2 der Dosiereinrichtung 1 gelagert.

Die Plattform 8 kann einen oder mehrere Teller fuer die Aufnahme der Behaelter 7 aufweisen, z.B koennen zwei Aufnahmeteller 10 und 11 vorgesehen sein, die mit einer Welle 12 fest verbunden sind, die in Lagern 13 und 14 verdrehbar gelagert ist.

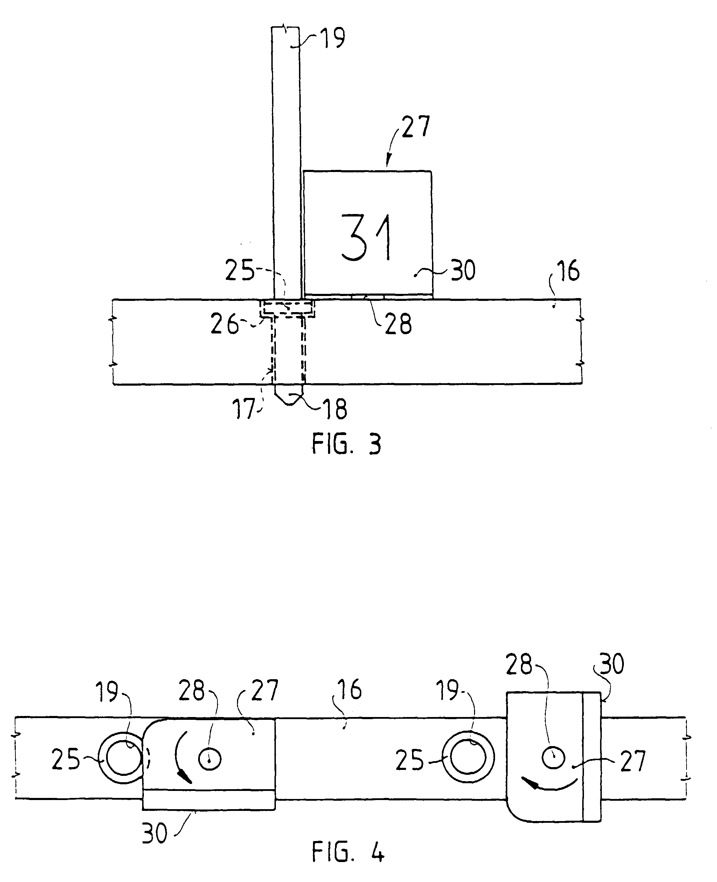

Mit der Plattform 8 ist eine ringfoermig ausgebildete Tragscheibe 16 verbunden, die Durchgangsoeffnungen 17 aufweist (Fig. 3), um Auslaufduesen 18 aufzunehmen, die in den freien Enden der Rohrleitungen 19 der Vorratsbehaelter 7 aufgenommen sind. Die Tragscheibe 16 ist konzentrisch gegenueber der Aufnahmewelle 12 fuer die Plattform 8 angeordnet. Der Umfang der Tragscheibe 16 und somit die Duesen 18 sind in bezug auf den auf der Waage 3 angeordneten Mischbehaelter 4 bewegbar.

Die Vorratsbehaelter 7 koennen beliebig ausgebildet sein. Es sind Vorratsbehaelter dargestellt, bei denen in die Verschlusskappe 20 ein Elektroventil eingebaut ist. Die Rohrleitungen 50 fuer die Zufuehrung eines Druckgases und die elektrischen Leitungen 51 koennen buendelartig zusammengefasst werden und nach oben oder nach unten in Richtung der jeweiligen Speisestellen geleitet werden.

Im dargestellten Ausfuehrungsbeispiel sind die Rohrleitungen und elektrischen Leitungen durch die Aufnahmeteller 10 und 11 sowie durch die hohl ausgebildete Welle 12 hindurchgefuehrt. Aufgrund der grossen Anzahl der vorgesehenen Vorratsbehaelter 7 kann in vorteilhafter Weise eine komplizierte und aufwendige Installation von Kollektorringen und Drehdichtungen vermieden werden, wobei eine Drehung mit umkehrbarer Drehbewegung der Plattform 8 ueber knapp weniger als 360° ermoeglicht wird.

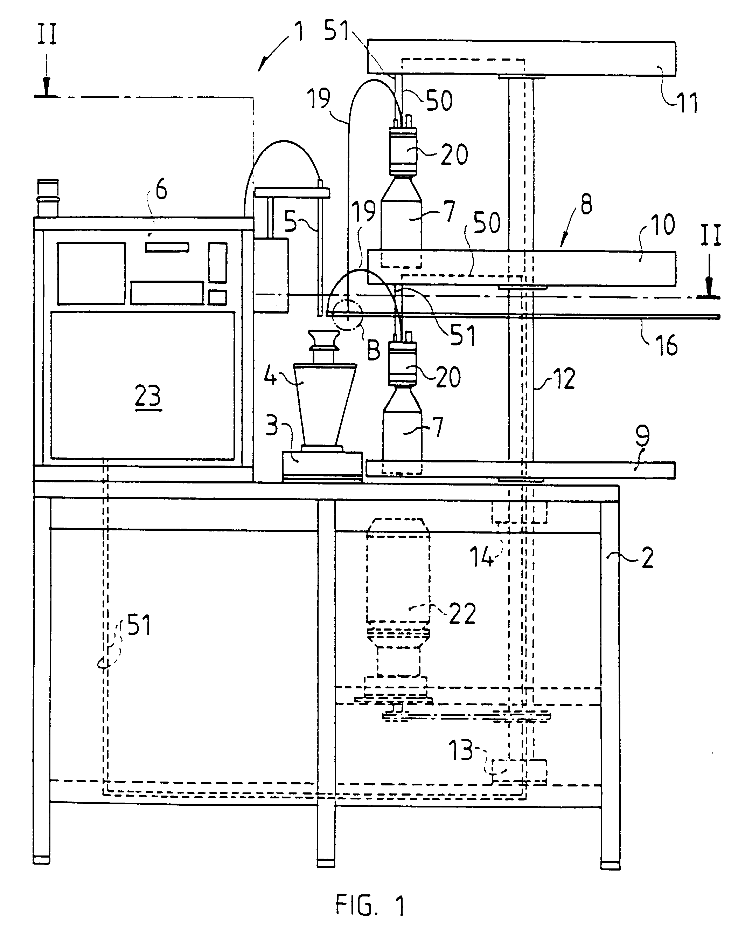

Dies erfordert lediglich die Vorsehung einer bescheidenen Ueberlaenge der Rohrleitungen und der elektrischen Leitungen, um zu gewaehrleisten, dass diese Leitungen der Schwenkbewegung der Plattform 8 ungehindert folgen koennen. Alternativ zu einer von Hand durchfuehrbaren Drehbewegung der Plattform 8, besteht die Moeglichkeit, die Plattform 8 ueber einen Elektromotor 22 anzutreiben, der in seiner Drehrichtung reversibel ausgefuehrt ist (siehe Fig. 1).

Durch Vorsehung der Auslaufduesen 18 mit gleichmaessiger Teilung wird eine automatische Steuerung sowie die Programmierbarkeit der Schwenkbewegung der Plattform 8 ermoeglicht.

Es kann z. B. eine Ausfuehrungsform mit einem Elektromotor, in Zusammenwirken mit einem nicht dargestellten Encoder, der der Welle 12 der Plattform 8 zugeordnet ist, vorgesehen sein. In vorteilhafter Weise ist der Dosiereinrichtung ein Mikroprozessor oder eine programmierbare Datenverarbeitungsanlage mit einem Tastenfeld zugeordnet, die schematisch mit 23 gekennzeichnet ist.

Der Mikroprozessor oder die Datenverarbeitungsanlage ist mit dem Elektromotor und den Elektroventilen der Vorratsbehaelter 7 wirkverbunden, in vorteilhafter Weise unter Zwischenschaltung von Analog/Digitalwandlern, die vom Stand der Technik her bekannt sind und nicht dargestellt wurden. Die Duesen 18 koennen in vorteilhafter Weise einen Anschlagkragen 25 aufweisen, die in entsprechend geformten Ausnehmungen 26 der Bohrungen 17 aufgenommen sind.

Zum einfachen Erkennen der einzelnen Duesen 18 sind blockartige Anzeigemittel 27 vorgesehen. Im dargestellten Beispiel ist das blockartige Anzeigemittel 27 als rechteckiges Gebilde ausgefuehrt und an der ringfoermigen Tragscheibe 16 im Punkt 28 angelenkt.

Wie der Zeichnungen zu entnehmen ist, sind die Abmessungen sowie die Montage der blockartigen Anzeigemittel 27 derartig gewaehlt, dass bei verschlossener Stellung (Fig. 3 und Fig. 4) das blockartige Bauteil 27 mit einer Seite den Anschlagkragen 25 der Duese 18 teilweise ueberdeckt und die Vorderseite 30, die z. B. die Erkennungsnummer 31 traegt, auf den Benuetzer zu gerichtet ist. In der nicht aktiven Stellung gemaess Fig. 4, ist auf der rechten Seite das blockartige Anzeigemittel 27 zu erkennen, wobei dieses den Kragen 25 freilegt und die Moeglichkeit schafft, die Duese 18 aus dem Sitz 17 fuer den Austausch des zugeordneten Vorratsbehaelters 7 zu entnehmen.

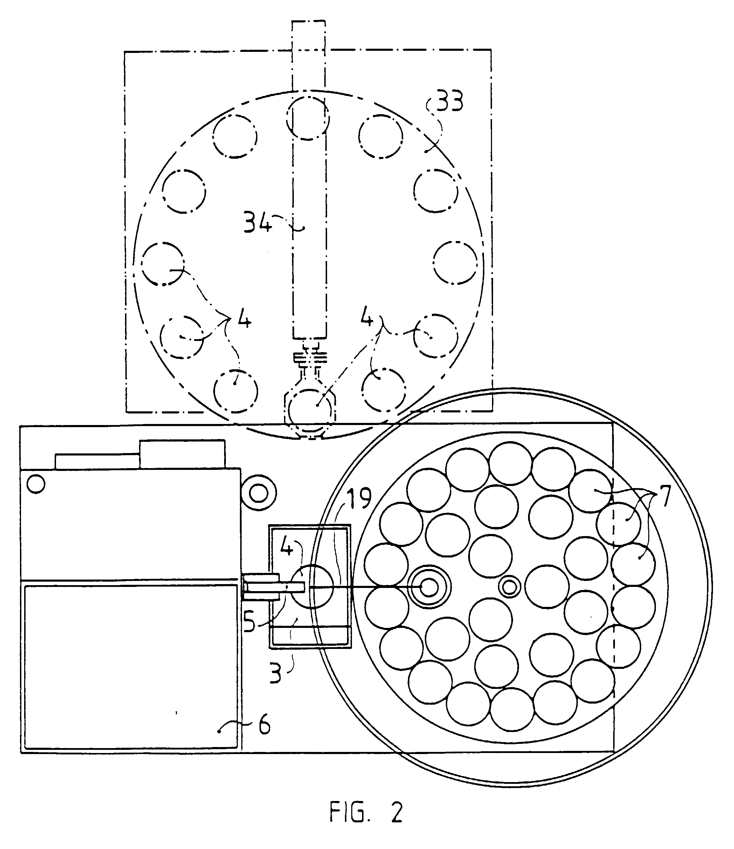

In Fig. 2 ist mit Strichpunktlinien dargestellt, dass die Dosiereinrichtung auch mit einer drehbaren Scheibe 33 ausgeruestet werden kann, die eine Vielzahl von Mischbehaeltern 4 aufnimmt. Die Scheibe 33 ist in vorteilhafter Weise, z.B. ueber den Motor 22 antreibbar und ueber den Mikroprozessor oder die Datenverarbeitungseinrichtung der Dosier- anlage programmierbar.

Der Scheibe 33 ist ein steuerbarer Greiferarm 34, der in vorteilhafter Weise ueber den Mikroprozessor oder Computer der Dosiereinrichtung steuerbar ist, zugeordnet. Die Scheibe 33 koennte auch ueber einen unabhaengigen Elektromotor oder einen pneumatischen Antrieb angetrieben werden.

Die Arbeitsweise der erfindungsgemaessen beschriebenen Dosiereinrichtungen wird im Anschluss kurz erlaeutert.

Durch Drehen der Plattform 8 koennen alle Vorratsbehaelter 7 der Plattform 8 in eine Zugriffslage fuer die Bedienungsperson, auf ein und derselben Seite der Dosiereinrichtung, z.B. auf der Vorderseite der Dosiereinrichtung, verschwenkt werden. Die Reihenfolge der Schwenkbewegungen der Plattform 8, zur Durchfuehrung der Dosiervorgaenge sowie fuer die Abfuellzeiten fuer die Dosierung der verschiedenen zu vermischenden Produkte, sowie zum Austauschen der Vorratsbehaelter, kann unter Verwendung des Mikroprozessors oder der verarbeitungsanlage der Dosiereinrichtung programmiert und gesteuert werden. Durch Vorsehen einer drehbaren Scheibe 33, zusammen mit einem steuerbaren Arm fuer das Bewegen der Mischbehaelter 4, wird es moeglich, einen automatischen Bewegungsablauf fuer mehrere unterschiedliche Mischvorgaenge der Mischbehaelter 4 zu steuern. Der Greiferarm 34 wird von Fall zu Fall dafuer sorgen, dass ein Mischbehaelter 4 von der Scheibe 33 auf die Waage 3 befoerdert wird und nach durchgefuehrtem Dosier- und Mischvorgang wird der Mischbehaelter erneut auf die Scheibe zurueckgebracht und nach weiterem Verschwenken der Scheibe eroeffnet sich die Moeglichkeit, einen neuen Mischbehaelter 4 auf der Waage abzustellen.

Es wurde auf eine ausfuehrliche Beschreibung der Verbindungen zwischen dem Mikroprozessor oder der Datenverarbeitungsanlage und dem Antriebsmotor, den Elektroventilen der Vorratsbehaelter und dem steuerbaren Greiferarm verzichtet. Ferner wurde auf die Beschreibung der einzelnen eingesetzten Bestandteile verzichtet, da diese dem Durchschnittsfachmann bekannt sind.

## Patentansprüche

1. Dosiereinrichtung (1), zum Herstellen dosierter Mischungen chemischer Produkte, mit einer Waage (3) und einer Aufnahmeplattform (8) mit Vorratsbehaeltern (7) wobei die Plattform (8) durch einen reversierbaren Antriebsmotor (22) im Gestell der Dosiereinrichtung (1) drehbar gelagert ist, und wobei die Vorratsbehaelter (7) mit jeweils einem Steuerventil, einer Druckgaszufuhrleitung und einer Auslauf leitung versehen sind, **dadurch gekennzeichnet,** dass die drehbare Plattform (8) tellerfoermig ausgebildet ist, dass die Auslaufleitungen (19) der Vorratsbehaelter (7) in eine ringfoermig ausgebildete Tragscheibe (16) muenden, die konzentrisch zur Drehachse (12) der Plattform (8) angeordnet ist, und dass die ringfoermige Tragscheibe (16) mit der Plattform (8) verbunden ist und ueber der Waage (3) verdrehbar angeordnet ist.

2. Dosiereinrichtung, nach Patentanspruch 1, **dadurch gekennzeichnet**, dass die freien Enden der Auslaufleitungen (19) der Vorratsbehaelter (7) in der ringfoermigen Tragscheibe (16) mit gleichbleibender Teilung aufgenommen sind.

3. Dosiereinrichtung, nach Patentanspruch 1, **dadurch gekennzeichnet**, dass der Antriebsmotor (22) der Plattform (8) und die elektrischen Leitungen (51) der Elektroventile der Vorratsbehaelter (7) mit einem Mikroprozessor oder einer programmierbaren Datenverarbeitungsanlage wirkverbunden sind.

4. Dosiereinrichtung, nach Patentanspruch 1, **dadurch gekennzeichnet**, dass die Welle (12) der Plattform (8) hohl ausgebildet ist und die Zufuehrleitungen (50) fuer ein Druckgas und die elektrischen Leitungen (51) zum Steuern der Elektroventile der Vorratsbehaelter (7) aufnimmt.

5. Dosiereinrichtung, nach Patentanspruch 1, **dadurch gekennzeichnet**, dass die Vorratsbehaelter (7) das Absperrventil in der Abschlusskappe (20) aufnehmen.

6. Dosiervorrichtung, nach Patentanspruch 1, **dadurch gekennzeichnet**, dass das freie Ende der Auslaufleitungen (19) der Vorratsbehaelter (7) mit Ausflussduesen (18) ausgeruestet sind, die einen Anschlagkragen (25) aufweisen und die Duesen (18) sowie der Anschlagkragen (25) in Ausnehmungen (17, 26) der ringfoermigen Tragscheibe (16) angeordnet sind und dass jeder Duese (18) ein blockfoermiges Erkennungsmittel (27) zugeordnet ist, das an der ringfoermigen Tragscheibe (16) angelenkt ist (28) und zwischen einer Festhaltelage der Duese (18) in der Ausnehmung (17) und einer die Duese (18) freigebenden Lage verschwenkbar ist.

7. Dosiereinrichtung, nach Patentanspruch 1, **dadurch gekennzeichnet**, dass eine drehbare Scheibe (33) vorgesehen ist, die ueber einen Elektromotor (22) antreibbar ist und eine Vielzahl von Mischbehaeltern (4) aufnimmt, dass der drehbaren Scheibe (33) ein steuerbarer Greiferarm (34) zugeordnet ist, der in Reihenfolge die Mischbehaelter (4) auf die Waage foerdert und nach Durchfuehrung des Mischvorganges diese auf der Scheibe (33) wieder abstellt, dass die Scheibe (33) durch den Motor (22) antreibbar ist, der die Plattform (8) antreibt und dass der steuerbare Greiferarm (34) mit einem Mikroprozessor oder einer Datenverarbeitungsanlage der Dosiereinrichtung wirkverbunden ist.

8. Dosiereinrichtung, nach Patentanspruch 1, **dadurch gekennzeichnet**, dass die Plattform (8) mehrstoeckig (9, 10, 11) ausgebildet ist.

## Claims

1. Proportioning apparatus (1) for producing proportioned mixtures of chemical products, having a balance (3) and a holding platform (8) with storage containers (7), the platform (8) being rotatably mounted in the frame of the proportioning apparatus (1) by a reversible drive motor (22), and the storage containers (7) being provided in each case with a control valve, a compressed-gas feed line and a discharge line, characterized in that the rotatable platform (8) is of plate-shaped design, in that the discharge lines (19) of the storage containers (7) lead into an annular supporting disc (16) which is arranged concentrically to the rotation axis (12) of the platform (8), and in that the annular supporting disc (16) is connected to the platform (8) and is rotatably arranged above the balance (3).

2. Proportioning apparatus according to Claim 1, characterized in that the free ends of the discharge lines (19) of the storage containers (7) are accommodated in the annular supporting disc (16) at uniform spacing.

3. Proportioning apparatus according to Claim 1, characterized in that the drive motor (22) of the platform (8) and the electric lines (51) of the solenoid valves of the storage containers (7) are operatively connected to a microprocessor or to programmable data processing equipment.

4. Proportioning apparatus according to Claim 1, characterized in that the shaft (12) of the platform (8) is of hollow design and accommodates the feed lines (50) for a compressed gas and the electric lines (51) for controlling the solenoid valves of the storage containers (7).

5. Proportioning apparatus according to Claim 1, characterized in that the storage containers (7) accommodate the shut-off valve in the closure cap (20).

6. Proportioning apparatus according to Claim 1, characterized in that the free end of the discharge lines (19) of the storage containers (7) are equipped with outflow nozzles (18) which have a stop collar (25), and the nozzles (18) as well as the stop collar (25) are arranged in recesses (17, 26) in the annular supporting disc (16), and in that a block-shaped identification means (27) is allocated to each nozzle (18), which identification means (27) is pivoted (28) on the annular supporting disc (16) and is pivotable between a retained position of the nozzle (18) in the recess (17) and a position releasing the nozzle (18).

7. Proportioning apparatus according to Claim 1, characterized in that a rotatable disc (33) is provided which can be driven via an electric motor (22) and accommodates a multiplicity of mixing containers (4), in that a controllable gripping arm (34) is allocated to the rotatable disc (33), which gripping arm (34) conveys the mixing containers (4) in sequence onto the balance and sets them down again on the disc (33) after the mixing operation is carried out, in that the disc (33) can be driven by the motor (22) which drives the platform (8), and in that the controllable gripping arm (34) is operatively connected to a microprocessor or to data processing equipment of the proportioning apparatus.

8. Proportioning apparatus according to Claim 1, characterized in that the platform (8) is of multi-deck (9, 10, 11) design.

## Revendications

1. Dispositif de dosage (1), pour la production de mélanges dosés de produits chimiques avec une balance (3) et une plate-forme de réception (8) avec récipients de réserve (7), la plate-forme (8) étant logée rotative dans le châssis du dispositif de dosage où chacun des récipients de réserve (7) est pourvu d'une soupape de commande, d'une conduite d'alimentation en gaz sous pression et d'une conduite d'échappement, caracterisé en ce que la plate-forme rotative (8) est en forme d'assiette, en ce que les conduites d'échappement (19) de récipient de réserve (7) débouchent dans un disque de support (16) configuré en forme annulaire, qui est agencé concentrique à l'axe de rotation (12) de la plate-forme (8) et en ce que le disque de support annulaire (16) est relié à la plate-forme (8) et est agencé rotatif au-dessus de la balance (3).

2. Dispositif de dosage selon la revendication 1, caractérisé en ce que les extrémités libres des conduites d'échappement (19) des récipients de réserve (7) sont reçues dans le disque de support de forme annulaire (16) avec un écart constant.

3. Dispositif de dosage selon la revendication 1, caractérisé en ce que le moteur d'entraînement (22) de la plate-forme (8) et les conduites électriques (51) des électro-vannes des récipients de réserve (17) sont reliés activement à un microprocesseur ou une installation programmable de traitement de données.

4. Dispositif de dosage selon la revendication 1, caractérisé en ce que l'arbre (12) de la plate-forme (8) est de configuration creuse et il reçoit les conduites d'alimentation (50) pour un gaz sous pression et les conduites électriques (51) pour la commande des électrovannes des récipients de réserve.

5. Dispositif de dosage selon la revendication 1, caractérisé en ce que les récipients de réserve (7) reçoivent la soupape d'arrêt dans le couvercle de fermeture (20).

6. Dispositif de dosage selon la revendication 1, caractérisé en ce que les extrémités libres des conduites d'échappement (19) des récipients de réserve (17) sont équipées de buses de décharge (18), qui présentent une collerette d'arrêt (25) et les buses (18) ainsi que les collerettes d'arrêt (25) sont agencées dans des éléments (17, 26) du disque de support annulaire (16) et en ce qu'à chaque buse (18) est affecté un moyen de reconnaissance (27) en forme de bloc qui est articulé au disque de support annulaire (16) (en 28) et est pivotant entre une position de maintien stationnaire de la buse (18) dans l'évidement (17) et une position libérant la buse (18).

7. Dispositif de dosage selon la revendication 1, caractérisé en ce qu'un disque rotatif (33) est prévu qui peut être entraîné par un moteur électrique (22) et qui reçoit un certain nombre de récipients de mélange (4), en ce qu'au disque rotatif (33) est affecté un bras réglable de serrage (34) qui fournit, en série, les récipients de mélange (4) à la balance et déplace de nouveau ceux-ci après accomplissement du processus de mélange vers le disque (33), en ce que le disque (33) peut être entraîné par le moteur (22), qui entraîne la plate-forme (8) et en ce que le bras réglable de serrage (34) est relié activement à un microprocesseur ou à une installation de traitement de données du dispositif de dosage.

8. Dispositif de dosage selon la revendication 1, caractérisé en ce que la plate-torme (8) est formée à plusieurs étages (9, 10, 11).
